# EUROPÄISCHE PATENTSCHRIFT

(11) **EP 3 003 537 B1**
(45) Veröffentlichungstag und Bekanntmachung des Hinweises auf die Patenterteilung: **27.01.2021**
(21) Anmeldenummer: 14726618.3
(22) Anmeldetag: 28.05.2014
(51) Int. Cl.: B01D 53/94

(54) **VERFAHREN ZUR VERRINGERUNG DER SCHÄDLICHEN ABGASBESTANDTEILE VON BENZINMOTOREN**
METHOD FOR REDUCING HARMFUL EXHAUST COMPONENTS FROM PETROL ENGINES
MÉTHODE DE RÉDUCTION DES COMPOSANTS NOCIFS DANS LES GAZ D'ÉCHAPPEMENT DES MOTEURS À ESSENCE.

(30) Priorität: 03.06.2013 DE 102013210270
(43) Veröffentlichungstag der Anmeldung: 13.04.2016
(73) Patentinhaber: Umicore AG & Co. KG, 63457 Hanau-Wolfgang (DE)
(72) Erfinder: SCHOENHABER, Jan, 64287 Darmstadt (DE); DESPRES, Joel, 63517 Rodenbach (DE); RICHTER, Joerg-Michael, 60389 Frankfurt (DE); ROESCH, Martin, 63110 Rodgau (DE)
(86) Internationale Anmeldenummer: PCT/EP2014/061024
(87) Internationale Veröffentlichungsnummer: WO 2014/195196

(56) Entgegenhaltungen:
- EP-A1- 2 360 361
- WO-A1-2007/031190
- WO-A1-2012/069404
- GB-A- 2 342 056
- US-A1- 2004 082 470

## Beschreibung

Die vorliegende Erfindung richtet sich auf ein Verfahren zur Verringerung der schädlichen Abgasbestandteile von mit Benzin betriebenen Verbrennungsmotoren durch Überleiten des Abgases über einen Dreiwegkatalysator (TWC). Der Katalysator zeichnet sich durch eine besondere inhomogene Verteilung des vorhandenen Sauerstoffspeichermaterials aus.

Das Abgas von Verbrennungsmotoren in Kraftfahrzeugen enthält typischerweise die Schadgase Kohlenmonoxid (CO) und Kohlenwasserstoffe (HC), Stickoxide (NOₓ) und gegebenenfalls Schwefeloxide (SOₓ), sowie Partikel, die überwiegend aus Rußrückständen und gegebenenfalls anhaftenden organischen Agglomeraten bestehen. CO, HC und Partikel sind Produkte der unvollständigen Verbrennung des Kraftstoffs im Brennraum des Motors. Stickoxide entstehen im Zylinder aus Stickstoff und Sauerstoff in der Ansaugluft, wenn die Verbrennungstemperaturen lokal 1000°C überschreiten. Schwefeloxide resultieren aus der Verbrennung organischer Schwefelverbindungen, die in nicht-synthetischen Kraftstoffen immer in geringen Mengen enthalten sind. Zur Entfernung dieser für Umwelt und Gesundheit schädlichen Emissionen aus den Abgasen von Kraftfahrzeugen sind eine Vielzahl katalytischer Abgasreinigungstechnologien entwickelt worden, deren Grundprinzip üblicherweise darauf beruht, dass das zu reinigende Abgas über einen Katalysator geleitet wird, der aus einem Durchflusswabenkörper und einer darauf aufgebrachten katalytisch aktiven Beschichtung besteht. Dieser Katalysator fördert die chemische Reaktion verschiedener Abgaskomponenten unter Bildung unschädlicher Produkte wie beispielsweise Kohlendioxid CO₂ und Wasser.

Dabei unterscheiden sich Wirkweise und Komposition der zum Einsatz kommenden Katalysatoren je nach Zusammensetzung des zu reinigenden Abgases und je nach zu erwartendem Abgastemperaturniveau am Katalysator zum Teil erheblich. Eine Vielzahl der als katalytisch aktive Beschichtung zum Einsatz kommenden Kompositionen enthält Komponenten, in denen unter bestimmten Betriebsbedingungen eine oder mehrere Abgaskomponenten zwischenzeitlich gebunden und bei einer geeigneten Änderung der Betriebsbedingungen wieder gezielt freigesetzt werden können. Komponenten mit einer derartigen Kapazität werden nachstehend allgemein als Speichermaterial bezeichnet.

Beispielsweise werden Sauerstoff speichernde Materialien in Dreiwegkatalysatoren zur Entfernung von CO, HC und NOₓ aus dem Abgas von mit im Mittel stöchiometrischem Luft/Kraftstoff-Gemisch betriebenen Benzinmotoren (Otto-Motoren) eingesetzt. Die bekanntesten Sauerstoffspeichermaterialien sind Cer-Zirkon-Mischoxide, die mit weiteren Oxiden, insbesondere mit Selten-Erd-Metalloxiden wie beispielsweise Lanthanoxid, Praseodymoxid, Neodymoxid oder Yttriumoxid dotiert sein können (Autoabgaskatalysatoren, Grundlagen - Herstellung - Entwicklung - Recycling - Ökologie, Christian Hagelüken, 2. Auflage, 2005, S. 49; Catalytic Air Pollution Control, Commercial Technology, R. Heck et al., 1995, S. 73-112).

Dreiwegkatalysatoren, die Sauerstoffspeichermaterial enthalten, werden in modernen Ottomotoren unter Bedingungen mit einem diskontinuierlichen Verlauf der Luftzahl λ betrieben. Sie unterlaufen in definierter Weise einem periodischen Wechsel der Luftzahl λ und somit einem periodischen Wechsel von oxidierenden und reduzierenden Abgasbedingungen. Dieser Wechsel der Luftzahl λ ist in beiden Fällen wesentlich für das Abgasreinigungsergebnis. Hierzu wird der Lambdawert des Abgases mit sehr kurzer Zyklenzeit (ca. 0,5 bis 5 Hertz) und einer Amplitude Δλ von 0,005 ≤ Δλ ≤ 0,05 um den Wert λ = 1 (reduzierende und oxidierende Abgasbestandteile liegen in stöchiometrischem Verhältnis zueinander vor) geregelt. Aufgrund der dynamischen Betriebsweise des Motors im Fahrzeug treten Abweichungen von diesem Zustand auf. Damit sich diese nicht nachteilig auf das Abgasreinigungsergebnis bei Überleiten des Abgases über den Dreiwegkatalysator auswirken, gleichen im Katalysator enthaltene Sauerstoffspeichermaterialien diese Abweichungen bis zu einem gewissen Grad aus, indem sie Sauerstoff nach Bedarf aus dem Abgas aufnehmen oder ins Abgas abgeben (Catalytic Air Pollution Control, Commercial Technology, R. Heck et al., 1995, S. 90).

Die ständig steigenden Anforderungen an die Emissionsminderung von Verbrennungsmotoren machen eine stetige Weiterentwicklung der Katalysatoren notwendig. Besondere Bedeutung haben dabei neben der Anspringtemperatur des Katalysators für die Umsetzung der Schadstoffe seine Temperaturstabilität und natürlich das Ausmaß der Verminderung der wesentlichen Abgasbestandteile eines Ottomotors, Kohlenwasserstoffe, Kohlenmonoxid und Stickoxide.

Die Optimierung der Sauerstoffspeicherkapazität in Dreiwegkatalysatoren hat auch dazu geführt, dass Konzepte vorgeschlagen wurden, diese Fähigkeit inhomogen über die Länge des Dreiwegkatalysators zu verteilen. Dabei sind sowohl solche Layouts vorgeschlagen worden, bei denen sich am anströmseitig (stromauf im Abgastrakt) weniger Saustoffspeicherkapazität als am abströmseitigen Ende (stromab im Abgastrakt) befindet (WO9617671A1; DE102010055147A1) wie umgekehrt (US7785545B2; EP2431094A1; US8323599B2).

Insbesondere die EP2431094A1 beschreibt einen Dreiwegkatalysator auf einem Tragkörper mit Sauerstoffspeichermaterial und einem zonierten Layout. Hier wird in einer ersten Sektion auf dem Dreiwegkatalysator eine zweischichtige katalytisch aktive Beschichtung vorgeschlagen, die eine bestimmte Menge an Sauerstoffspeichermaterial enthält, die größer ist, als die auf dem abströmseitigen Ende des vorgestellten Katalysators befindliche einschichtige katalytisch aktive Beschichtung. Der hier vorgestellte Dreiwegkatalysator ist insbesondere geeignet, weniger schädliches H₂S zu produzieren. Allerdings wird deutlich gemacht, dass es nachteilig wäre, wenn das Verhältnis von anströmseitig vorhandener Speicherkapazität zu abströmseitig vorhandener einen gewissen Wert unterschreiten würde Weitere Dreiwegkatalysatoren sind aus GB2342056A bekannt.

Wie schon angedeutet stellt auch die Verbesserung der Dreiwegkatalysatoren im Hinblick auf die Verringerung der primären Schadgase HC, CO und NOx immer noch eine Herausforderung für die Wissenschaft dar. Aufgabe der vorliegenden Erfindung war daher die Angabe eines Dreiwegkatalysators, der verglichen mit den Katalysatoren des Standes der Technik zumindest in der hier angesprochenen Disziplin überlegen ist. Darüber hinaus sollte er vom eingesetzten Herstellungspreis gesehen konkurrenzfähig sein, den Herstellungspreis anderer Dreiwegkatalysatoren möglichst unterbieten können.

Diese und weitere sich aus dem Stand der Technik dem Fachmann in naheliegender Weise erschließende Aufgaben werden durch ein Verfahren gemäß vorliegendem Anspruch 1 erfüllt. Bevorzugte Ausgestaltungen des erfindungsgemäßen Katalysators finden sich in den von Anspruch 1 abhängigen Unteransprüchen.

Dadurch, dass man einen Dreiwegkatalysator zur Verringerung schädlicher Abgasbestandteile von mit Benzin betriebenen Verbrennungsmotoren einsetzt, der einen oder mehrere benachbarte, bevorzugt zusammenhängend positionierte Tragkörper mit einer katalytisch aktiven Beschichtung aufweist, wobei die katalytisch aktive Beschichtung in Strömungsrichtung gesehen eine inhomogene Verteilung der Sauerstoffspeicherkapazität dergestalt aufweist, dass am abströmseitigen Ende des Katalysators kein den Sauerstoff speicherndes Material vorhanden ist und dieser Bereich ein relatives Volumen am gesamten Dreiwegkatalysator von 5-50 % besitzt, gelangt man überraschend einfach, dafür aber nicht minder vorteilhaft zur Lösung der gestellten Aufgabe. Mit dem erfindungsgemäßen Katalysator ist es möglich, bei vergleichbarer Aktivität Einsatzstoffkosten zu sparen oder bei gleichen Einsatzstoffkosten eine höhere Effektivität des Katalysators zu gewährleisten.

Grundsätzlich besteht der hier beanspruchte Abgaskatalysator aus einem oder mehreren benachbarten Tragkörpern, auf den/die oder in den/die - z.B. in die porösen Wandstrukturen - die katalytisch aktive Beschichtung aufgetragen wird. Dem Fachmann ist klar, um welche Träger es sich vorliegend handeln kann. Gemeint sind so genannte Durchfluss-Monolithe oder Partikelfilter (Christian Hagelüken, Autoabgaskatalysatoren, 2005, 2. Auflage, S. 27 - 46). Derartige Aggregate (Filter als auch Durchfluss-Monolithe) sind - auch mit einer TWC-aktiven Beschichtung versehen - dem Fachmann hinlänglich geläufig (z.B. für Filter DE102010055147A1; US20100293929; US20110252773; US20110158871).

Im Stand der Technik bekannte übliche Filterkörper können aus Metall und/oder keramischen Materialien aufgebaut sein. Dazu gehören beispielsweise metallische Gewebe- und Gestrickfilterkörper, Sintermetallkörper und Schaumstrukturen aus keramischen Materialien. Bevorzugt werden poröse Wandflussfiltersubstrate aus Cordierit, Siliziumcarbid oder Aluminiumtitanat eingesetzt. Diese Wandflussfiltersubstrate weisen An- und Abströmkanäle auf, wobei jeweils die abströmseitigen Enden der Anströmkanäle und die anströmseitigen Enden der Abströmkanäle gegeneinander versetzt mit gasdichten "Stopfen" verschlossen sind. Hierbei wird das zu reinigende Abgas, das das Filtersubstrat durchströmt, zum Durchtritt durch die poröse Wand zwischen An- und Abströmkanal gezwungen, was eine exzellente Partikelfilterwirkung bedingt. Durch die Porosität, Poren-/Radienverteilung, und Dicke der Wand kann die Filtrationseigenschaft für Partikel ausgelegt werden. Die katalytisch aktive Beschichtung liegt in und/oder auf den porösen Wänden zwischen An- und Abströmkanälen vor. Bevorzugt einzusetzende Filtersubstrate können der europäischen Patentanmeldung EP12164142.7, EP2042225 A1, EP2042226 A2 entnommen werden. Durchfluss-Monolithe sind im Stand der Technik übliche Katalysatorträger, die aus Metall oder keramischen Materialien bestehen können. Bevorzugt werden feuerfeste Keramiken wie zum Beispiel Cordierit eingesetzt. Die Monolithe aus Keramik besitzen meist eine wabenförmige Struktur, die aus durchgehenden Kanälen bestehen, weshalb diese auch als Kanal-Fluss-Monolithe oder Durchfluss-Monolithe bezeichnet werden. Das Abgas kann durch die Kanäle strömen und kommt dabei mit den Kanalwänden in Kontakt, welche mit einer katalytisch aktiven Beschichtung versehen sind. Die Anzahl der Kanäle pro Fläche wird durch die Zelldichte charakterisiert, welche üblicherweise zwischen 300 und 900 Zellen pro Quadrat Zoll (cells per square inch, cpsi) liegt. Die Wanddicke der Kanalwände beträgt bei Keramiken zwischen 0,5 - 0,05 mm.

Es sei angemerkt, dass der hier eingesetzte Dreiwegkatalysator entweder aus einem Tragkörper bestehen kann oder mehrere einzelne in Strömungsrichtung benachbarte Dreiwegkatalysatoren umfassen kann. Unter benachbart ist erfindungsgemäß eine Anordnung zu verstehen, bei der die den Dreiwegkatalysator ausmachenden Tragkörper in einem gewissen Abstand zueinander angeordnet sind, vorteilhaft in einer motornahen und im Unterboden befindlichen Position, wobei äußerst bevorzugt keine weitere katalytische Einheit zwischen den Tragkörpern vorhanden ist. Bevorzugt ist jedoch eine Anordnung, bei der die den Dreiwegkatalysator ausmachenden Tragkörper zusammenhängend positioniert und somit direkt hintereinander (auf Stoß) angeordnet sind. Der einzelne Tragkörper wird dabei so präpariert, dass die jeweilige katalytische Beschichtung auf oder in dem Träger bzw. den Tragkörpern vorhanden ist (siehe EP1974809 oder EP2308592 für Aufwand- und EP2042226 A2 für Inwandbeschichtung).

Die katalytisch aktive Beschichtung, welche vorliegend Verwendung findet, rekrutiert sich aus den Materialien, die dem Fachmann für diesen Zweck hinlänglich bekannt sind (M. V. Twigg, Catalysis Today 2011, 163, 33-41; EP1158146A2; EP0870531A1; EP0601314A1; EP0662862A1; EP0582971A1; EP0314058 A1; EP0314057 A1). Häufig weist die katalytische Beschichtung der Dreiwegkatalysatoren die Metalle Platin, Palladium und Rhodium in verschiedenster Zusammensetzung abgeschieden auf hochoberflächigen relativ temperaturunempfindlichen Metalloxiden, wie z.B. Aluminiumoxid bzw. Cer-Zirkonoxid auf. Die katalytische Beschichtung kann erfindungsgemäß, ggf. in unterschiedlicher Zusammensetzung zoniert und/oder in einer oder mehreren, ggf. unterschiedlich ausgestalteten katalytischen Beschichtungen übereinander auf dem oder den Träger(n) vorliegen (WO08113445A1, WO08000449A2; WO08113457A1; US8323599B2).

Gängige Dreiwegbeschichtungen weisen darüber hinaus häufig weitere Funktionalitäten wie z.B. Kohlenwasserstoffspeicher oder Stickoxidspeicher (4-Wegkatalysator) auf. Der vorliegende Dreiwegkatalysator, der diese genannte Funktionen ebenfalls innehaben kann, besitzt auf jeden Fall ein den Sauerstoff im Autoabgas speicherndes Material, welches wie eingangs beschrieben in der Lage ist, Sauerstoff im mageren Bereich (λ>1) einzulagern und im fetten Bereich (λ<1) an das umgebende Medium abzugeben. Derartige Materialien sind dem Fachmann geläufig (z.B.: E: Rohart, O. Larcher, S. Deutsch, C. Hedouin, H. Aimin, F. Fajardie, M. Allain, P. Macaudiere, Top. Catal. 2004, 30/31, 417-423 oder R. Di Monte, J. Kaspar, Top. Catal. 2004, 28, 47-57). Vorzugsweise wählt man das eingesetzte Material mit Sauerstoffspeicherkapazität aus der Gruppe der Ceroxide bzw. der Cer-Zirkonoxide und Mischungen derselben aus, wobei zwischen Cer-reichen und Cer-armen Mischoxiden unterschieden wird. Erfindungsgemäß wird dieses Material jetzt so über die Länge des Dreiwegkatalysators verteilt, dass am abströmseitigen Ende des Tragkörpers oder der Tragkörper kein Sauerstoffspeicherndes Material vorhanden ist. Das Vorhandensein oder die Abwesenheit von sauerstoffspeichernden Materialien kann dabei durch den Sprungtest bestimmt werden. Hierbei kann die Sauerstoffspeicherfähigkeit eines zwischen zwei Lambdasonden lokalisierten Katalysators oder eines Systems durch den bei Luftzahlsprüngen auftretenden Zeitversatz der beiden Sondensignale berechnet werden (Autoabgaskatalysatoren, Grundlagen - Herstellung - Entwicklung - Recycling - Ökologie, Christian Hagelüken, 2. Auflage, 2005, S. 62).

Die Verteilung des Sauerstoffspeichermaterials kann unter der obigen Prämisse so ausgestaltet werden, dass die Sauerstoffkapazität im Katalysator schrittweise oder kontinuierlich (z.B. durch ansteigende Washcoatmenge) vom abströmseitigen Ende zum anströmseitigen Ende steigt. Einen schrittweisen Anstieg kann man z.B. durch eine zonierte Beschichtungsanordnung erreichen, in dem unterschiedliche Speichermaterialien oder ein unterschiedlicher Gehalt an Speichermaterial in den unterschiedlichen Zonen der Beschichtung vorhanden sind. Bei mehreren Tragkörpern bietet sich an, diese entsprechend der zonierten Anordnung jeweils unterschiedlich zu beschichten und direkt hintereinander anzuordnen, so dass das erfindungsgemäße Konzept verwirklicht ist.

Bevorzugt ist allerdings, das schrittweise Konzept der Verteilung der katalytisch aktiven Beschichtung zu wählen. Der abströmseitige Bereich des Dreiwegkatalysators, der keine Sauerstoffspeicherkapazität aufweisen soll, hat ein relatives Volumen am gesamten Dreiwegkatalysator von 5-50 %, bevorzugt 15-45 % und ganz besonders bevorzugt 25-40 %.

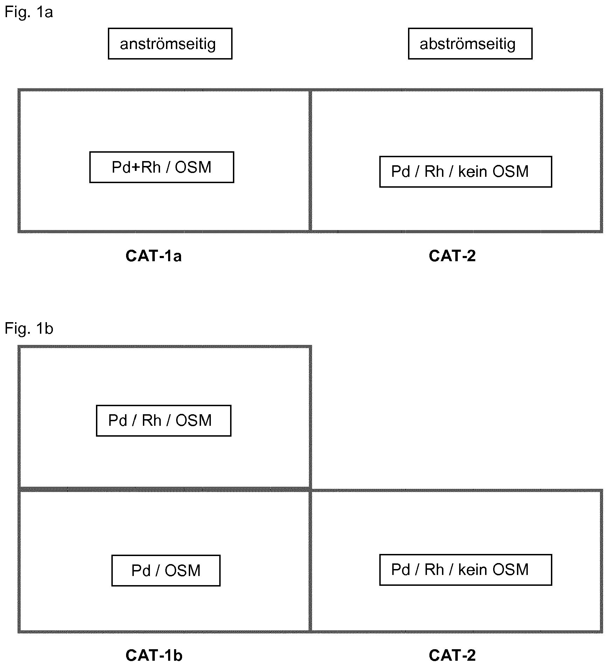

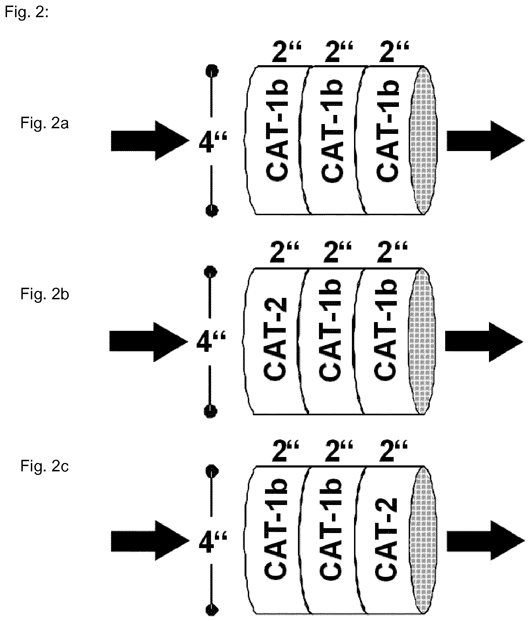

Wie schon angedeutet weist ein Dreiwegkatalysator in der Regel Metalle aus der Gruppe bestehend aus Platin, Palladium, Rhodium und Mischungen derselben auf. Bevorzugt kommen im erfindungsgemäßen Dreiwegkatalysator jedoch nur die Metalle Palladium und Rhodium vor. Diese werden vorteilhafter Weise in der Form angeordnet, dass mindestens 2 bevorzugt jedoch 3 unterschiedliche katalytisch aktive Beschichtungen in mindestens 2 Bereichen angeordnet werden. Diese mindestens 2 Bereiche befinden sich entweder auf einem Tragkörper in mindestens 2 separaten Zonen, wobei die vordere Zone bzw. die vorderen Zonen einen mindestens einen 1-schichtigen, vorzugsweise jedoch einen 2-schichtigen Aufbau zeigt/en oder die unterschiedlichen Bereiche verteilen sich auf mindestens 2 hintereinander positionierte einzelne Tragkörper entsprechend der zonierten Anordnung (Fig. 1, Fig. 2). In einer weiter bevorzugten Ausführungsform besteht der erfindungsgemäße Dreiwegkatalysator daher aus mindestens 2, ganz besonders bevorzugt 3, zusammenhängend positionierten Tragkörpern. Im Falle von 3 Tragkörpern sind die ersten beiden Tragkörper (mit Sauerstoffspeicherkapazität) äußerst bevorzugt identisch. Besonders bevorzugt besitzt der abströmseitige Tragkörper (ohne Sauerstoffspeicherkapazität) eine katalytisch aktive Beschichtung, die eine Abscheidung von Palladium und Rhodium auf mit Bariumoxid stabilisiertem, hochoberflächigen Aluminiumoxid umfasst (siehe EP1181970A1). Ebenfalls besonders bevorzugt zeigt der anströmseitige Tragkörper einen zweischichtigen Aufbau, wobei in der Unterschicht ausschließlich Palladium als katalytisch aktives Metall und in der Oberschicht sowohl Palladium als auch Rhodium vorhanden sind. Die Metalle in dieser katalytischen Doppelbeschichtung liegen auf hochoberflächigem Aluminiumoxid, welches gegebenenfalls durch Lanthanoxid, Praseodymoxid, Bariumoxid oder Yttriumoxid stabilisiert ist, und auf hochoberflächigem Ceroxid, Cer-Zirkonoxid, oder auf hochoberflächigem, durch Seltenerdoxide wie z.B. Lanthanoxid, Praseodymoxid, Neodymoxid oder Yttriumoxid, dotiertem Cer-Zirkonoxid abgeschieden vor (EP1974809B1).

Die Zusammensetzung der besonders bevorzugten katalytisch aktiven Beschichtungen stellt sich wie folgt in vorteilhafter Weise dar:
Für anströmseitige 1-schicht Zonierung/en bzw. katalytisch aktive Beschichtung/en:

| | | | |
|---|---|---|---|
| Pd | 0.35-8.83 g/l | bevorzugt 1.41-7.06 g/l | bes. bevorzugt 3.53-5.30 g/l |
| Rh | 0.04-0.71 g/l | bevorzugt 0.07-0.35 g/l | bes. bevorzugt 0.11-0.28 g/l |
| Al₂O₃ | 20-120 g/l | bevorzugt 30-100 g/l | bes. bevorzugt 40-90 g/l |
| OSM | 20-120 g/l | bevorzugt 30-100 g/l | bes. bevorzugt 40-90 g/l |

Für abströmseitige Zonierung/en bzw. katalytisch aktive Beschichtung/en:

| | | | |
|---|---|---|---|
| Pd | 0.35-8.83 g/l | bevorzugt 1.41-7.06 g/l | bes. bevorzugt 3.53-5.30 g/l |
| Rh | 0.04-0.71 g/l | bevorzugt 0.07-0.35 g/l | bes. bevorzugt 0.11-0.28 g/l |
| Al₂O₃ | 40-200 g/l | bevorzugt 50-170 g/l | bes. bevorzugt 70-150 g/l |
| BaO | 0-30 g/l | bevorzugt 2-25 g/l | bes. bevorzugt 3-20 g/l |

Für anströmseitige 2-schicht Zonierung/en bzw. katalytisch aktive Beschichtung/en:
Anströmseitige Oberschicht:

| | | | |
|---|---|---|---|
| Pd | 0-0.50 g/l | bevorzugt 0.05-0.40 g/l | bes. bevorzugt 0.10-0.30 g/l |
| Rh | 0.04-0.71 g/l | bevorzugt 0.07-0.35 g/l | bes. bevorzugt 0.11-0.28 g/l |
| Al₂O₃ | 20-120 g/l | bevorzugt 30-100 g/l | bes. bevorzugt 40-80 g/l |
| OSM | 20-120 g/l | bevorzugt 25-100 g/l | bes. bevorzugt 30-90 g/l |

Anströmseitige Unterschicht:

| | | | |
|---|---|---|---|
| Pd | 0.35-8.83 g/l | bevorzugt 1.41-7.06 g/l | bes. bevorzugt 3.53-5.30 g/l |
| Al₂O₃ | 20-120 g/l | bevorzugt 30-100 g/l | bes. bevorzugt 40-80 g/l |
| OSM | 20-120 g/l | bevorzugt 25-100 g/l | bes. bevorzugt 30-90 g/l |

Für abströmseitige Zonierung/en bzw. katalytisch aktive Beschichtung/en:

| | | | |
|---|---|---|---|
| Pd | 0.35-8.83 g/l | bevorzugt 1.41-7.06 g/l | bes. bevorzugt 3.53-5.30 g/l |
| Rh | 0.04-0.71 g/l | bevorzugt 0.07-0.35 g/l | bes. bevorzugt 0.11-0.28 g/l |
| Al₂O₃ | 40-200 g/l | bevorzugt 50-170 g/l | bes. bevorzugt 70-150 g/l |
| BaO | 0-30 g/l | bevorzugt 2-25 g/l | bes. bevorzugt 3-20 g/l |

Als Tragkörper eignen sich bevorzugt keramische Wabenkörper, so genannte Durchflusssubstrate und ebenfalls keramische Filterkörper aus z.B. Cordierit, sowie analoge Träger aus Metall (siehe oben). Hierbei kommen bevorzugt runde oder ovale Träger mit einem Durchmesser von 63,5-132,1 mm und einer Länge von 76,6-152,4 mm zum Einsatz. Für die Verwirklichung des erfindungsgemäßen Konzepts kann ein motornaher Katalysator mit zwei Beschichtungszonen, oder mehrere seriell angeordnete motornahe Katalysatoren mit den entsprechenden Beschichtungen verwendet werden. Des Weiteren kann die Erfindung ebenfalls durch ein System bestehend aus einem motornahen sauerstoffspeichermaterial enthaltenen Katalysator und einem OSM-freien Katalysator im Unterboden des Fahrzeugs, mit einem Abstand von vorteilhafter Weise um die 20-100 cm von dem motornahen Katalysator, realisiert werden. Der abströmseitige Bereich des Dreiwegkatalysators, der keine Sauerstoffspeicherkapazität aufweisen soll, hat eine relatives Volumen am gesamten Katalysatorsystem von 5-50 %, bevorzugt 15-45 % und ganz besonders bevorzugt 25-40 %.

In einer weiteren Ausgestaltung der vorliegenden Erfindung bezieht sich diese auf ein Verfahren zur Verringerung der schädlichen Abgasbestandteile von mit Benzin betriebenen Verbrennungsmotoren durch Überleiten des Abgases über einen erfindungsgemäßen Dreiwegkatalysator. Es sei vorangeschickt, dass die für die Ausgestaltung des erfindungsgemäßen Dreiwegkatalysators genannten bevorzugten Ausführungsformen mutatis mutandis auch für das vorliegende Verfahren gelten.

Im Rahmen der vorliegenden Erfindung wird unter einer katalytisch aktiven Beschichtung der Washcoat samt ggf. nachfolgender Imprägnierungsschritte verstanden, der auf den oder die Tragkörper bzw. in den oder die Tragkörper aufgebracht bzw. eingebracht wird und im Wesentlichen die oben angegeben Materialien enthält.

Unter motornah wird im Rahmen der Erfindung ein Abstand vom Motorauslass von weniger als 80 cm, bevorzugt weniger als 60 cm und ganz bevorzugt weniger als 50 cm bis zum Katalysatoreinlass verstanden. Unter der Unterbodenposition versteht der Fachmann eine Position unterhalb der Fahrkabine in einem Abstand von 20 - 200 cm, bevorzugt 40 - 150 cm und besonders bevorzugt 60 - 100 cm vom Auslass des motornahen Tragkörpers.

Die vorliegende Erfindung zeigt in beeindruckender Art und Weise, dass selbst so ausgereifte Technologien, wie sie beim Dreiwegkatalysator anzutreffen sind, durch die besondere Ausgestaltung der einzelnen Funktionen weiterhin verbessert werden können. Es ist zu verzeichnen, dass der erfindungsgemäße Dreiwegkatalysator, welcher am abströmseitigen Ende gerade keine Speicherfunktion für Sauerstoff aufweist, den durchgängig mit Sauerstoffspeichermaterial versehenen Dreiwegkatalysatoren in der Verringerung der schädlichen Abgase CO, HC und NOx deutlich überlegen ist. Dieses war vor dem Hintergrund des bekannten Standes der Technik mitnichten zu erwarten. Demzufolge stellt die vorliegende Technik eine erfinderische Weiterentwicklung gegenüber dem bekannten Stand der Technik dar.

### Figuren:

Fig. 1: Die Figur 1 zeigt den prinzipiellen Aufbau eines besonders bevorzugten erfindungsgemäßen Dreiwegkatalysators. Dieser weist in Fig 1.a in der anströmseitigen Schicht die Metalle Palladium und Rhodium als katalytisch aktive Komponenten auf. Gleichfalls vorhanden ist ein Sauerstoffspeichermaterial (OSM). Ein mit einem derartigen Aufbau versehener Tragkörper wird abgekürzt als CAT-1a bezeichnet. Die abströmseitig angeordnete Einzelschicht ist ohne Sauerstoffspeichermaterial hergestellt und umfasst die Metalle Palladium und Rhodium. Dieser Tragkörper wird als CAT-2 gekennzeichnet. In Fig 1.b weist der erfindungsgemäße Dreiwegekatalysator in der anströmseitigen Oberschicht die Metalle Palladium und Rhodium als katalytisch aktive Komponenten auf. Gleichfalls vorhanden ist ein Sauerstoffspeichermaterial (OSM). Die anströmseitige Unterschicht besitzt ebenfalls ein Sauerstoffspeichermaterial, weist jedoch im Gegensatz zur Oberschicht nur das Metall Palladium auf. Ein mit einem derartigen Aufbau versehener Tragkörper wird abgekürzt als CAT-1b. Die abströmseitig angeordnete Einzelschicht ist ohne Sauerstoffspeichermaterial hergestellt und umfasst die Metalle Palladium und Rhodium. Dieser Tragkörper wird - wie oben - als CAT-2 gekennzeichnet.
Fig. 2: Die Übersicht zeigt den prinzipiellen Versuchsaufbau hinsichtlich der untersuchten Dreiwegkatalysatoren. Es wurden jeweils 3 Scheiben an Tragköpern von 2 Zoll Breite und 4 Zoll Durchmesser hintereinander in den Abgasstrang positioniert und anschließend untersucht. Fig 2a: Genereller Dreiwegekatalysator; Fig 2b: Stand der Technik (z.B. WO9617671A1); Fig 2c: Erfindungsgemäße Versuchsanordnung
Fig. 3: Das Diagramm unter Figur 3 zeigt die Emission von Kohlenwasserstoffen (THC) der in Fig. 2 dargestellten Versuchsanordnungen 2a-2c. Es ist zu erkennen, dass das erfindungsgemäße System 2c (CAT-1b / CAT-1b / CAT-2) und das System 2b besser als das Voll-OSC System 2a sind.
Fig. 4: Das Diagramm unter Figur 4 zeigt die Emission von NMHC der in Fig. 2 dargestellten Versuchsanordnungen 2a-2c. Analog zu den Daten für THC (Fig. 3), zeigen das erfindungsgemäße System 2c (CAT-1b / CAT-1b / CAT-2) und das System 2b Vorteile gegenüber dem Voll-OSC System 2a.
Fig. 5: Hier sind die Ergebnisse der Untersuchung der Systeme (Fig. 2) im Hinblick auf CO-Emissionen aufgeführt. Das erfindungsgemäße System (CAT-1b / CAT-1b / CAT-2) schnitt hier signifikant am besten ab.
Fig. 6: Diese Figur zeigt die Ergebnisse der Untersuchung der Systeme aus Fig. 2 hinsichtlich der NOx-Emissionen. Gerade hier zeigt das erfindungsgemäße Layout 2c gegenüber den übrigen Systemen 2a und 2b überraschend gute Ergebnisse.

### Beispiel:

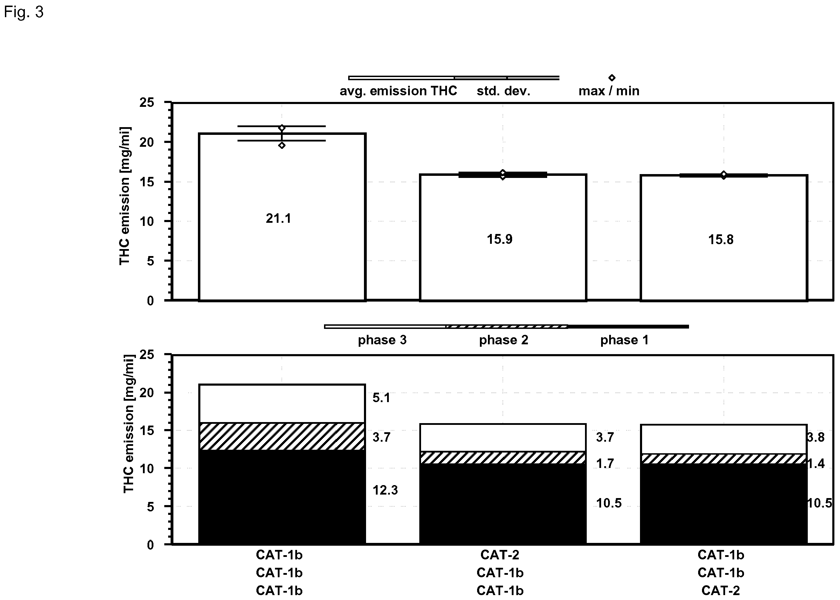

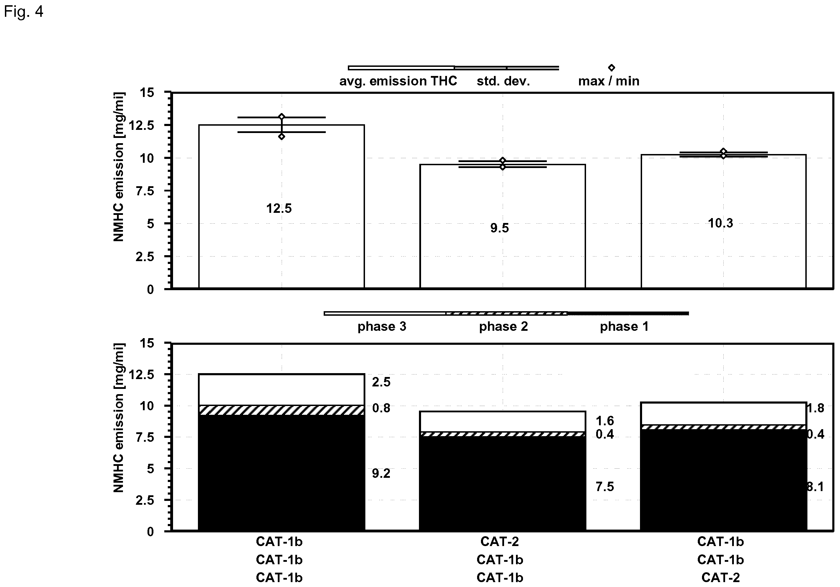

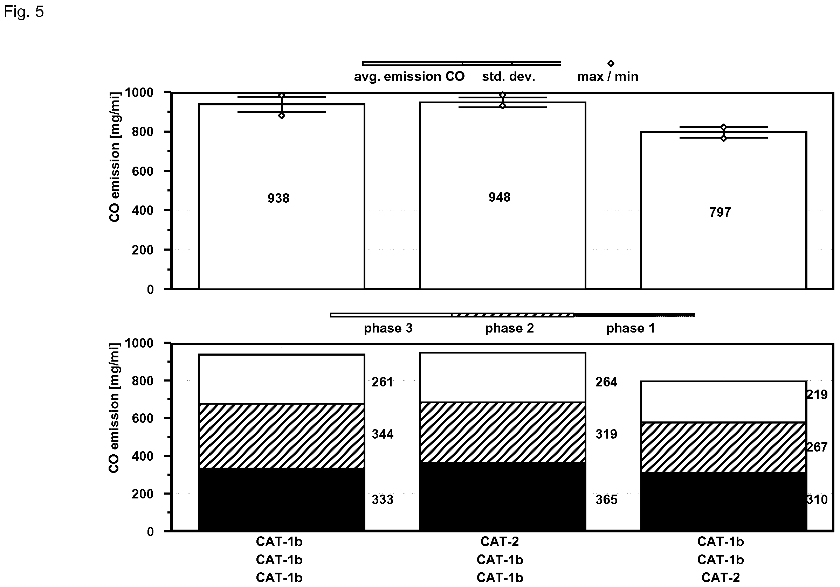

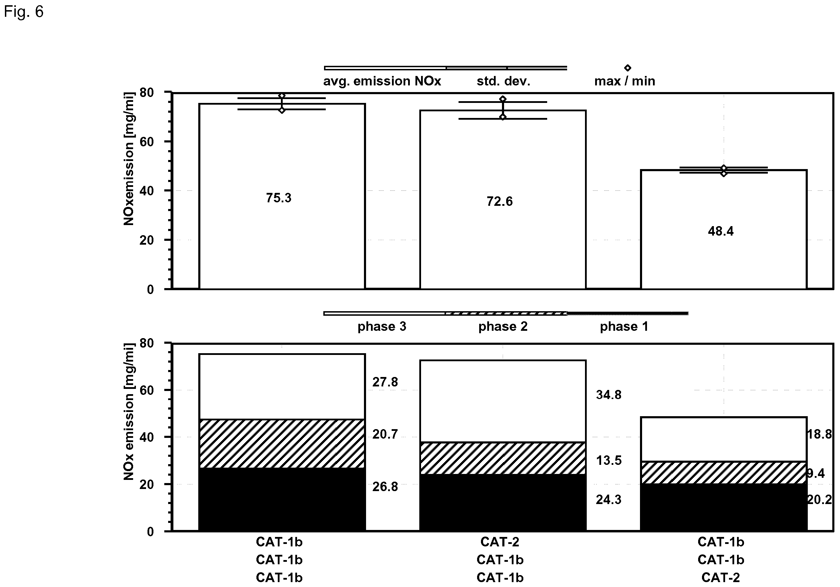

1) Die keramischen Substrate wurden nach aktuellem Stand der Technik mit den verschiedenen Washcoats zu den in Fig. 2 dargestellten Katalysatoren beschichtet. Im Anschluss sind diese Katalysatoren in einer ZDAKW-Alterung am Motorprüfstand gealtert worden, sodass eine Laufleistung im Fahrzeug von 160000 km simuliert wurde. Die Alterung zeichnet sich durch regelmäßige Schubabschaltungsphasen aus, was dann bei temporär magerer Abgaszusammensetzung zu einer Betttemperatur von über 1000 °C führt. Diese Konditionen bedingen eine irreversible Schädigung des Sauerstoffspeichermaterials und der Edelmetalle. Diese Katalysatoren wurden im weiteren Verlauf an einem hochdynamischen Motorprüfstand, an einer aktuellen 2.0L Vierzylinderapplikation, im dynamischen FTP-75 Fahrzyklus in motornaher Position getestet. Das Abgas der jeweiligen Phasen des FTP-75 wurde in einem CVS-System in drei verschiedenen Beuteln gesammelt. Nach Beendigung des Tests wurden die Beutel analysiert und entsprechend der aktuellen US-Gesetzgebung gewichtet. Die Ergebnisse sind in Fig 3-6 dargestellt. Das System 2c zeigt deutliche Vorteile in den Kohlenmonoxid- und Stickoxidemissionen.

## Patentansprüche

1. Verfahren zur Verringerung der schädlichen Abgasbestandteile von mit Benzin betriebenen Verbrennungsmotoren durch Überleiten des Abgases über einen Dreiwegkatalysator aufweisend einen oder mehrere benachbarte Tragkörper mit einer katalytisch aktiven Beschichtung, wobei die katalytisch aktive Beschichtung in Strömungsrichtung gesehen eine inhomogene Verteilung der Sauerstoffspeicherkapazität aufweist,
**dadurch gekennzeichnet, dass**
am abströmseitigen Ende des Katalysators kein den Sauerstoff speicherndes Material vorhanden ist und dieser Bereich ein relatives Volumen am gesamten Dreiwegkatalysator von 5-50 % besitzt und die Sauerstoffspeicherkapazität im Katalysator schrittweise oder kontinuierlich vom abströmseitigen Ende zum anströmseitigen Ende steigt.

2. Verfahren nach Anspruch 1,
**dadurch gekennzeichnet, dass**
die katalytisch aktive Beschichtung zoniert und/oder in einer oder mehreren Schichten auf dem oder den Tragkörpern vorliegt.

3. Verfahren nach Anspruch 1 und/oder 2,
**dadurch gekennzeichnet, dass**
das eingesetzte Material mit Sauerstoffspeicherkapazität ausgewählt ist aus der Gruppe der Ceroxide, de Cer-Zirkonoxiden, der dotierten Cer-Zirkonoxide Oxide, und Mischungen derselben.

4. Verfahren nach einem oder mehreren der vorhergehenden Ansprüche,
**dadurch gekennzeichnet, dass**
der Dreiwegkatalysator Metalle aus der Gruppe bestehend aus Platin, Palladium, Rhodium und Mischungen derselben aufweist.

5. Verfahren nach einem oder mehreren der vorhergehenden Ansprüche,
**dadurch gekennzeichnet, dass**
der Dreiwegkatalysator aus mindestens 2 zusammenhängend positionierten Tragkörpern besteht und der abströmseitige Tragkörper eine katalytisch aktive Beschichtung aufweist, die eine Abscheidung von Palladium, Rhodium und Bariumoxid auf hochoberflächigem Aluminiumoxid umfasst.

## Claims

1. Method for reducing the harmful exhaust gas constituents of petrol-operated internal combustion engines by passing the exhaust gas through a three-way catalytic converter comprising one or more adjacent support bodies having a catalytically active coating, wherein the catalytically active coating has an inhomogeneous distribution of the oxygen storage capacity when viewed in the flow direction,
**characterized in that**
no oxygen storing material is present at the downstream end of the catalytic converter, and this region has a relative volume on the entire three-way catalytic converter of 5-50%, and the oxygen storage capacity in the catalytic converter rises incrementally or continuously from the downstream end to the upstream end.

2. Method according to claim 1,
**characterized in that**
the catalytically active coating is zoned and/or applied in one or more layers onto the supporting body or bodies.

3. Method according to claim 1 and/or 2,
**characterized in that**
the material with oxygen storage capacity that is used is selected from the group of cerium oxides, cerium-zirconium oxides or doped cerium-zirconium oxides and mixtures thereof.

4. Method according to one or more of the previous claims,
**characterized in that**
the three-way catalytic converter comprises metals selected from the group consisting of platinum, palladium, rhodium and mixtures thereof.

5. Method according to one or more of the previous claims,
**characterized in that**
the three-way catalytic converter consists of at least 2 connected supporting bodies, and the supporting body on the downstream end has a catalytically active coating that comprises deposits of palladium, rhodium and barium oxide on aluminum oxide with a large surface.

## Revendications

1. Méthode de réduction des composants nocifs dans les gaz d'échappement de moteurs à combustion interne à essence par passage des gaz d'échappement par un catalyseur à trois voies comportant un ou plusieurs corps porteurs adjacents dotés d'un revêtement à action catalytique, le revêtement à action catalytique comportant, vu dans la direction d'écoulement, une répartition non homogène de la capacité de stockage de l'oxygène,
**caractérisée en ce que**
aucun matériau stockant l'oxygène n'est présent à l'extrémité côté aval du catalyseur, et cette zone possède un volume relatif par rapport à la totalité du catalyseur trois voies de 5 à 50 % et la capacité de stockage de l'oxygène dans le catalyseur augmente par paliers ou en continu de l'extrémité côté aval à l'extrémité côté amont.

2. Méthode selon la revendication 1,
**caractérisée en ce que**
le revêtement à action catalytique se présente par zones et/ou en une ou plusieurs couches sur le ou les corps porteurs.

3. Méthode selon la revendication 1 et/ou 2,
**caractérisée en ce que**
le matériau avec capacité de stockage d'oxygène utilisé est choisi dans le groupe des oxydes de cérium, des oxydes mixtes de cérium et de zirconium, des oxydes mixtes de cérium et de zirconium dopés, et des mélanges de ceux-ci.

4. Méthode selon l'une ou plusieurs des revendications précédentes,
**caractérisée en ce que**
le catalyseur à trois voies comporte des métaux du groupe constitué du platine, du palladium, du rhodium et des mélanges de ceux-ci.

5. Méthode selon l'une ou plusieurs des revendications précédentes,
**caractérisée en ce que**
le catalyseur à trois voies est constitué d'au moins 2 corps porteurs positionnés de manière contiguë et le corps porteur côté aval comporte un revêtement à action catalytique, qui comprend un dépôt de palladium, de rhodium et d'oxyde de baryum sur de l'oxyde d'aluminium à grande surface.
